# EUROPEAN PATENT SPECIFICATION

(11) **EP 0 706 415 B1**
(45) Date of publication and mention of the grant of the patent: **14.01.1998**
(21) Application number: 94917516.0
(22) Date of filing: 07.06.1994
(51) Int. Cl.: B01D 1/26, C01F 7/04, B01D 3/06, C01F 7/06

(54) **MULTI-CELL HEATING SYSTEM**
MEHRZELLIGES HEIZUNGSSYSTEM
SYSTEME DE CHAUFFAGE MULTICELLULAIRE

(30) Priority: 07.07.1993 AU PL9836/93
(43) Date of publication of application: 17.04.1996
(73) Proprietor: KAISER ENGINEERS PTY. LIMITED, Perth, W.A. 6000 (AU)
(72) Inventor: DE BOER, Dirk, Jacob, Byford, W.A. 6201 (AU)
(74) Representative: Brierley, Anthony Paul
(86) International application number: AU9400303
(87) International publication number: WO9501824

(56) References cited:
- AU-A- 1 333 166
- DE-A- 1 202 258
- DE-A- 3 044 651
- GB-A- 1 202 268
- US-A- 4 055 218
- PATENT ABSTRACTS OF JAPAN, C-72, page 13; & JP,A,54 149 376 (CHIYODA KAKO KENSETSU K.K.), 22 November 1979 (22.11.79).

## Description

The present invention relates to a multi-cell heating system. The heating system is particularly useful for increasing the temperature of a slurry through a critical temperature range, the critical temperature range being that range at which the likelihood of scale deposition is at its greatest, in a manner such that the adverse effects of scale deposition are minimised.

The heater system of this invention has been primarily developed for flash evaporation equipment in the alumina refining industry. However, the useful application of the invention is not limited to that industry and may be extended to all branches of industry that encounter similar or identical processing problems to those mentioned below.

In order to understand the relevance of the advantages provided by the present invention, particularly in relation to the alumina refining industry, it is helpful to explain some of the problems encountered in that industry. To this end, a brief description of the processes involved will now be provided.

Alumina, or aluminium oxide, is chemically designated as Al₂0₃. It is an important mineral used industrially to manufacture a wide range of products from abrasives to aluminium metal. Its occurrence in commercial quantities is mainly as bauxite ore, in which alumina is present in the form of hydrates and silicates. Of these, the hydrates, which occur as both alumina monohydrate and alumina trihydrate, are the only compounds that are extracted and these must be separated from the remainder of the ore. A typical commercial bauxite ore ranges from about 30% to about 60% extractable alumina.

Industrially, the extraction of alumina is accomplished by the Bayer process, so called after the Austrian chemist K J Bayer who developed the process in 1888. In this process, finely ground bauxite is mixed with aqueous caustic soda solution and heated. This causes the alumina hydrates to go into solution, which allows them to be separated from the residual solids. Commercially this latter step is carried out by a combination of sedimentation and filtration.

Cooling of the filtered liquid reverses the effects of the heating process and the dissolved alumina hydrates are precipitated while the remaining liquid reverts to its initial state and can be reused to repeat the process. The temperature range of the process depends upon the quality of the bauxite. In this respect, the digestion of trihydrate ores normally requires temperatures less than 150°C, whereas the digestion of monohydrate ores requires temperatures ranging to as high as 300°C.

In commercial plants the extraction of alumina is usually carried out in a continuous process and on a large scale. The caustic liquor stream is continuously recirculated and alternately heated and cooled in accordance with the requirements of the Bayer process. However, because of the large scale of operation the energy content of the liquor stream is very high, especially in high temperature refineries, and efficient energy management is essential to the economy and viability of the plant. A large proportion of the equipment installed in alumina refineries is therefore dedicated to heat recovery.

The main area for heat recovery is in the digestion section of the refinery where heat is from the outgoing hot Bayer solution to the incoming cold bauxite slurry. This is accomplished in tubular heaters, wherein cold slurry flows through the inside of the tubes and hot flash vapour flows on the outside of the tubes. The vapour condenses on the cold(er) tubes, which causes it to release its heat of evaporation, which is then absorbed by the cold slurry stream.

This heating process is usually carried out in a number of stages. Thermodynamic theory shows that the efficiency of this heat recovery process increases with the number of heating stages that are employed. In practice, the number of stages is limited by economic considerations. In particular, each additional stage requires more equipment and there is thus a point beyond which the marginal increase in efficiency does not warrant the additional investment.

It is in the tubular heaters of the digestion section of a Bayer process plant, particularly those in high temperature Bayer plants, that a number of problems arise that add considerably to the capital cost for equipment, as well as to the cost for operating and maintaining the plant.

In particular, to operate the Bayer process on a bauxite ore that contains both alumina monohydrate and alumina trihydrate, the slurry of bauxite and aqueous caustic soda must be heated to temperatures as high as 300°C in order to successfully dissolve the monohydrates. However, and as will be described in more detail below, this requires the slurry to be taken through temperatures where the deposition of scale from the slurry reaches a peak.

In this respect, as the slurry temperature rises, the trihydrate goes readily into solution, but a portion of the trihydrate is converted to monohydrate. The monohydrate is not readily soluble until it reaches a higher temperature and thus monohydrate scale tends to precipitate and deposit on the walls of the heaters. Similarly, other types of scales, for example silicates and titanates, are also deposited.
The major problem with the build up of scale on any heater unit is that it seriously effects the heat transfer coefficient. The scale deposits also increase resistance to fluid flow and thus add considerably to the hydraulic gradient necessary to maintain the required flow through the apparatus. In order to provide at least a minimum acceptable time span between heater down time for defouling (the cleaning cycle), generous safety factors are usually provided during the initial design. Consequently, the heaters are provided with surface areas several times higher than comparable heaters would be in industries where the deposition of scale is not a significant factor. This adds considerably to the total length of heater tubing. Pumping heads are therefore high which in turn requires the equipment and its connecting pipe work to withstand considerably higher pressures than would otherwise be the case.

Clearly, these design allowances have a cumulative effect that has a large impact on the capital and operating costs of the plant equipment.

Furthermore, despite the large safety factors built into the design and the expense of the equipment, its service life remains limited. It still requires a considerable period of down time to descale tubing and carry out associated maintenance, such as the replacement of blocked tubes and the like. It is therefore standard practice in the industry to provide ample spare equipment, so that cleaning can be carried out on a rotating basis without effecting plant production or the continuity of operations. Indeed, in large conventional refineries it is not unusual to have from 30% to 50% spare equipment in the heat recovery section.

Finally, the thermal performance of the heaters is directly related to the rate of flash steam generation in the evaporator vessels and this has an important bearing on the quality and utility of the condensate that is collected from the heater train.

Not surprisingly, the industry has been engaged for many years in actively developing improvements in the digestion plant. These improvements have been in the way of process improvements, equipment improvements, operating improvements, or a combination thereof.

A most notable process improvement was the introduction of pre-digestion desillication. In this process the bauxite slurry is held in large tanks at temperatures of about 90°C to 108°C for periods from 6 to 16 hours prior to digestion. This causes a considerable amount of scaling compounds that would otherwise be deposited in less accessible equipment, or would have detrimental effects on the digestion process at higher temperatures, to react and precipitate prior to the digestion heating process.

One such improvement utilised a system of tubes provided with heating jackets, instead of conventional shells, where the tubes are jacketed singly or in small groups. The tubes are large in diameter compared with standard heat exchanger tubes and essentially continue uninterrupted throughout the length of the entire heater system. The jackets are not continuous, but are applied intermittently in accordance with the number of evaporators and to suit dismantling of heater elements for cleaning and maintenance. Regarding thermal design, there is essentially no difference between such tube heaters and conventional heaters; but mechanically the differences are significant.

However, this design was primarily aimed at eliminating the old fashioned autoclave type digester in which the build-up of scale was quite out of proportion with what is considered bad scale build-up in modern alumina refineries. It did not therefore specifically address the problems that now remain in modern large scale plants.

Following that, a somewhat similar design was developed with a similar aim of finding a suitable alternative to the old style autoclave. Since scaling-up of tube digesters remained a problem, a heater design was adopted that contained three tubes within each jacket. Two of these tubes conveyed bauxite slurry, the third conveyed spent liquor. At the end of the heater system, and prior to digestion, the three flows were combined to provide a digestion slurry of the requisite consistency. The flow through the tubes was periodically switched, so that each of three lines are in turn subjected to spent liquor flow, with the aim of dissolving the scale. This procedure was carried out in-situ and under operating conditions (i.e at temperature), and removed at least a portion of the scale. However, the equipment required periodic cleaning with acid, to remove the components of the scale that were insoluble in spent liquor or that remained undissolved, and this cleaning process could not be carried out under operating conditions. Therefore, despite its in-situ spent liquor cleaning facility, the system still required at least one spare heater line in order to maintain production while acid cleaning was carried out.

The metallurgical implications were more serious, as the spent liquor generated by this process was above 140°C and could not be contained in carbon steel. This required alloys that are either extremely expensive, or, if only moderately expensive, such as ferritic stainless steels, were difficult to weld.

Another development has been to retain conventional shell and tube heat exchangers and install them with the tube bundles vertically instead of horizontally. This has proved to be reasonably effective in limiting the growth of scale within the tubes and demonstrates the effect of gravity on precipitation and sedimentation/cementation on the tube wall.

An aim of the present invention is to provide a multi-cell heating system that controls the deposition of scale therein in order to reduce the adverse effects of scale deposition as described above.

One solution to this problem is described in DE-A-1 202 258 which teaches a device according to the preamble of claim 1, and involves the maintenance of a minimum velocity condition within the heat-exchanger tubes.

The present invention provides a multi-cell heating system for increasing the temperature of a slurry through a critical temperature range, the heater system comprising an array of heater cells, the array comprising a plurality of heater cell trains and a plurality of heater cell stacks, each stack being associated with and being in fluid communication with a respective evaporator, and each train being defined by aligned individual heater cells in adjacent stacks such that the slurry may be split to flow through two or more of the trains in order to be heated thereby, the array being configured such that there is an inlet temperature at one side thereof and an outlet temperature at the other side thereof, the critical temperature range being between the inlet and outlet temperatures.

The heater cell stacks across which the critical temperature range occurs correspond to a region of high scale growth. In this respect, the present invention is characterised by the interconnection between each evaporator and its respective heater cell stack being capable of allowing fluid communication between adjacent heater cell stacks and certain downstream heater cell stacks, the interconnection also being capable of allowing the number of heater cell stacks within the region of high scale growth to be increased or decreased and allowing the substitution of heater cell stacks already in the region of high scale growth with heater cell stacks not already within the region of high scale growth, such alteration of the number of heater cell stacks within the region of high scale growth being provided by the alteration of the fluid flow from various evaporators to various heater cell stacks.

The effect of the multi-cell heating system of the present invention is to allow an operator, in process operations where there is an identifiable critical temperature range through which the deposition of scale will peak, to move the region of high scale growth to heater cells substantially unaffected by scale growth and thus to spread the scale growth over a greater number of cells. This allows for greatly improved control over the deposition of scale and its distribution inside the heater cells, while providing reduced resistance to fluid flow and also providing a degree of control over the correct distribution of throughput versus available heat transfer for each individual train. It also provides substantial operator control over the vapour distribution between flash tanks.

With particular regard to the Bayer process referred to above, a critical temperature range has been identified by this invention that makes the system of the invention particularly well-suited thereto. Indeed, it has been determined that a disproportionate amount of the scale deposition in digestion heater tubes occurs within a limited temperature range, that which is called a critical temperature range.

In particular, as the temperature of a bauxite slurry rises, the contained trihydrate goes readily into solution but a portion of the trihydrate is converted to monohydrate. The monohydrate is not readily soluble until it reaches a higher temperature and thus monohydrate scale tends to precipitate and deposit on the walls of the heaters. Similarly, other types of scales, for example silicates and titanates, are also deposited. The deposition continues as the temperature increases, but then peaks as the temperature reaches a certain value and then rapidly decreases shortly past that value. Thus, the deposition of monohydrate scale essentially ceases after the temperature passes through a critical temperature range. Then, as the temperature increases beyond that range, the monohydrate also goes readily into solution.

Thus, in a monohydrate-trihydrate bauxite ore there will be a critical temperature range during which the majority of scale that is capable of depositing on the heater equipment will be deposited.

In this respect, in prior art techniques the particular heater units which subject the slurry to an increase in temperature, and which pass the slurry through the critical temperature range, are fixed and thus only those particular heater units are subjected to high rates of scale growth. The provision of further heater units in those prior art techniques thus does not remove the scale difficulties as those further heater units are not subjected to the same degree of scaling due to them generally not carrying slurry within the critical temperature range.

Indeed, in prior art systems the localisation of heater scale is particularly troublesome. It causes the thermal performance of heaters in the 150°C to 200°C temperature range to decline much more rapidly than the performance of the heaters outside that range. As the performance of the most effected heaters declines, the pressure-temperature profile through the heat recovery system changes, and the thermal duty is gradually transferred to the cleaner heaters. The temperature intervals between these cleaner heaters increase and effectively this reduces the number of heater stages that are actually utilised. This in turn reduces the overall efficiency of the heat recovery process and limits full utilisation of the heat transfer area in those heaters in which the deposition of scale is basically still within acceptable limits; in other words a point is reached where the total available heater surface area would still be serviceable if it would be more or less evenly divided over the number of stages, but where, because the number of useful stages has effectively been reduced, the heater system as a whole can no longer perform.

Furthermore, the troublesome localisation of heater scale is directly related to the performance of the evaporation vessels. In a conventional heat recovery system, evaporator duty is always equal to the condensing capacity of its corresponding heaters. The evaporators are sized to keep the upward vapour velocity below a certain limit. This is in order to prevent any caustic or solid matter, contained in the evaporator fluid, from being carried along with the vapour flow. When heaters foul at different rates and thermal capacities change, the vapour generating rates of the evaporator vessels must change accordingly. The vapour rates in the cleaner stages will gradually increase and their upward vapour velocities may eventually exceed allowable values. Impurities will then be carried along by the vapour stream and effect the process in two ways:-
a. Impurities will be deposited on the outside of the heater tubes and this will further diminish heat transfer capability. Moreover, scale on the outside of the tubes is difficult to detect and is also much more difficult to remove than scale deposited on the inside of the tubes.
   b. The impurities will pollute the condensate which is then no longer fit to be returned to the steam plant. The condensate must then be used for secondary purposes and this generally results in the loss of much of the energy it contains. There may also be an increase in plant water consumption to compensate for the loss of boiler make up water.

   Depending on the degree and exact location of scale deposition, unequal heater fouling will ultimately limit the capacity of a heat recovery system in one of three possible ways:-
   i. Because the heater train has reached the limits of its thermal capacity, while a significant proportion of the total heat transfer area may still only be moderately fouled.
   ii. Because it has reached the limit of its hydraulic (pressure) capacity due to localised constrictions of the flow area.
   iii. Because it produces bad condensate.

These limitations, as outlined in i., ii., and iii. above, are addressed by the multi-cell heating system of the present invention. The present invention allows the available heat transfer area to be more efficiently utilised. It enables vapour from stages in the high scale region to be channelled to heat transfer areas in the low scale region without necessarily effecting the pressure-temperature profile through the evaporators. Vapour generation rates remain therefore more uniform and the likelihood of impurities contaminating the condensate is lessened. More importantly, because the temperature intervals between stages remain more constant, there is no reduction in the number of effective stages, when heaters become scaled, and there is therefore no concomitant reduction in the overall efficiency of the heat recovery process.

By enabling vapour from the stages in the high scale region to be progressively channelled to the excess heat transfer area in the low scale region, the heater tube area available to high scale growth is significantly increased. Scale will therefore be more equally and more thinly distributed. Consequently, heaters require to be descaled less frequently and operating efficiency will be increased. Also, because the scale is thinner, its effect on tube diameter is less and constrictions to fluid flow are less likely to occur.

In a preferred form of the invention, the heater cells are multiple pass heaters. However, each pass preferably comprises only a single tube. Preferably, such single tube heaters resemble conventional heaters in that they have a shell side, a tube plate and tube passes, although unlike a conventional heater, they have no channel section.

While each heater cell may contain one or more passes, each pass preferably comprises only a single tube. In its most convenient arrangement, which does not require provisions to be made for differential expansion between tubes and shell, each pass comprises a single U-tube. Thus, externally to the tube plate, individual passes may be affected by means of U-bends to provide a single continuous tube within each shell. The number of passes to be employed is a design consideration, in which tube size, shell diameter, heater length and required heat transfer area are weighed up to provide the most cost-effective unit.

The tube plate is preferably designed to provide access for inspection of the outside of the tubes and the inside of the shell. It is preferably provided with a gasket specifically designed so that the tube plate to shell joint can be opened up and regasketted without the need to fully withdraw the tube bundle.

At the tube plate, all tubes may be flanged to provide access for manual descaling. However, cleaning flanges generally need not be provided for internal bends, which preferably have sufficient radius to allow standard cleaning equipment to be effective. At the opposite end to the tube plate the shell may be provided with a flanged cap to allow for inspection of the internal "U" bends. Preferably, the depth of this cap is sufficient to allow the internal "U" bends to be cut out and replaced in situ, without undoing the tube plate or withdrawing the tube bundle.

The shell diameter is generally determinable by tube bundle geometry. The shell preferably also has sufficient volume, clear from the heat transfer area it provides, to act as condensate receiver. In this respect, condensate collection inside the heater shell eliminates the requirement for a condensate receiver for each individual cell. It also simplifies the pipe work connecting the cells and helps equalising vapour flow rates from evaporators.

The number of cells per stack is generally determined by economic and operational considerations. Consistent with the principles set out in the foregoing, to accommodate two different vapour streams, at least two heater cells per stack are required. However, a third cell should be provided for descaling.

In practice, the most suitable number of cells per heater stack ranges from six to ten. Three cells, of which only two are operating, would provide no operational flexibility.
In particular it would provide only two modes of operation; firstly, where the second cell is utilised for redistribution of heat transfer areas (50% distributed); and secondly, where it is not utilised (0%), and there is then no provision for a more gradual redistribution. Also, one spare cell in three amounts to 50%, non productive, standby equipment.

However, a heater stack of six smaller cells - being five operating cells and one spare cell - provides a more suitable arrangement. Five operating cells allow the heat transfer area per stage to be redistributed at 20% increments, the spare cell then amounting to only 20% stand by equipment which is more representative of the ratio between the length of the operating cycle and the length of the descaling cycle.

As described above, a stack of heater cells is preferably installed opposite each flash evaporator. Each heater cell stack is preferably capable of having vapour or steam fed to it from its associated flash evaporator, and the interconnection of the adjacent flash evaporators and stacks allows vapour or steam to also be fed to it from adjacent flash evaporators, both upstream and downstream. Thus, each heater cell in a stack is preferably individually valved and can have its steam supply individually connected, varied or isolated as required.

Preferably, the flow of slurry is at right angles to the flow of steam or vapour. If each stack is considered to be arranged vertically, the steam or vapour flow to the heater cells is also distributed vertically, in which case the slurry flow runs horizontally, arranged in tiers or trains. Thus, all of the uppermost units in each stack are connected on the tube side to form one continuous slurry stream - similarly for the second unit in each stack, all being connected to provide a single uninterrupted stream from the slurry inlet to the end of the respective heater cell train.

With regard to the manner in which the array of heater cells are connected, there are various aspects to be considered. In particular, scale growth has a significant effect on hydraulic resistance. It may also seriously effect flow distribution between parallel streams propelled from a common pressure source. In particular, such streams foul at different rates, flows being distributed in accordance with the hydraulic resistance of each individual stream. However, this distribution does not necessarily coincide with the comparative thermal capacity of each stream and overall thermal performance will thus be impaired. Therefore, heater cell trains are preferably individually controlled, and this may be achieved in two ways.

Firstly, each stream may be pumped individually. However, this generally only is practical in large plants in which the flow through each individual train of heater cells is large enough to warrant a dedicated pump. Secondly, all streams may be pumped from a common source and a flow control valve may be installed in each line of heaters. Scale growth is a gradual process and while the rates of growth may vary, there are no sudden fluctuations in the way scale growth effects the heaters. Manual control, by means of throttling valves, is therefore quite satisfactory. Furthermore, both manual control and automatic control may be activated by the outlet temperature of the slurry heater streams.

With regard to the collection and transmission of condensate, since individual heater cells may operate at different temperatures, their condensates should not be collected in a common receiver vessel installed at each stage as in conventional plants, but each train of heater cells should have its condensate collected and transmitted separately. Effectively, this divides the condensate system into a number of parallel streams running from the high pressure end to the low pressure end of the plant. In this respect, individual streams are small and this allows condensate to be collected inside each heater cell. Separate condensate pots are therefore not required, except at the first (low temperature) heater stack. Reflux vapour lines and steam traps, or flow control valves may also be eliminated provided the condensate piping is arranged in the preferred manner.

The preferred arrangement relies on orifice plates and allows steam to by-pass when the condensate flow rate declines, This may occur when plant throughput is low and/or when condensing capacity declines due to scale deposition. Such by-pass steam is not detrimental to heater train operation provided it reaches the next heater in a saturated state at the downstream pressure condition. Within the range of plant operating conditions that can be expected in practice, such will always be the case. Moreover, in the case of reduced condensate flow due to scale deposition, by-pass of steam actually enhances thermal performance. Indeed, it distributes vapour to an adjoining evaporation train without a concomitant redistribution of evaporator temperatures and pressures and thereby augments the vapour distribution pipework.

The resulting condensate system is relatively simple and provides additional advantages over systems utilised in conventional plants. Its advantages are not confined to high temperature plants, but are equally applicable to low temperature plants.

With regard to the collection of the non-condensable gases entrained in the vapour stream, these are separated in the condensation process and are collected in the heaters. However, these gases are detrimental to heater performance and thus should preferably be removed. Each cell in the heater train is therefore preferably connected to a non-condensable vent system. While the individual vent streams are small, each stream is saturated with water vapour and collectively they represent a significant amount of energy, as well as condensate. Water vapour can be separated from non-condensable gases by cooling, and this is preferably carried out in two low pressure heater cells. Energy is thus retrieved by the incoming slurry stream. The heat transfer area required for this operation should be taken into account in the thermal design.

There are significant design, constructional, operational and maintenance advantages to making all heater cells identical. Thermal design should therefore preferably be arranged to suit heater cells of equal transfer area, except for the first two heater stacks. The first two stacks are preferably designed so that a smaller area is dedicated to condensing evaporator steam, wherein the difference in area is preferably to allow one entire cell in each of the first two heater stacks to be dissociated from the evaporator vessels and to be utilised for non-condensible cooling.

The heating system of the present invention results in an extremely compact and flexible physical arrangement in which each heater cell is effectively a node on a network formed by the slurry and vapour distribution systems. This arrangement provides a great deal of operator control over the deposition of scale, both within slurry streams as well as between slurry streams. It also provides control over the distribution of vapour flow; over the velocity distribution between streams and over the quality of condensate. The arrangement also facilitates the descaling operation. In this respect, heater cells may be cleaned individually, in any number of adjacent cells in one train, or an entire train of cells may be cleaned at one time. This considerably reduces the amount of equipment that has to be taken out of service for scaling at any one time and provides large savings in the amount of spare equipment that needs to be installed.

The present invention will now be described in relation to an example that will be described in conjunction with two embodiments as illustrated in the accompanying drawings. In the drawings:
Figure 1 is a schematic representation of a conventional heating system;
Figures 2 and 3 are schematic representations of a multi-cell heating system according to a first preferred embodiment of the present invention;
Figure 4 is a schematic representation of a multi-cell heating system according to a second preferred embodiment of the present invention;
Figures 5a, 5b, and 5c are elevation, plan and section views respectively of a stack of heater cells as used in the embodiment of Figure 4; and
Figures 6 and 7 are schematic representations of additional connections for the embodiment of Figure 4.

The following example is specific to the alumina refining industry, and in particular to the extraction of alumina as achieved by the Bayer process. However, and as explained above, the invention is not to be limited to use only with the Bayer process.

In the Bayer process a finely ground bauxite ore is mixed with aqueous caustic soda solution and is held in large tanks at temperatures in the order of 90°C to 108°C. This causes a considerable amount of scaling compounds that would otherwise be deposited in less accessible equipment, or would have detrimental effects on the digestion process at high temperatures, to react and precipitate prior to the digestion heating process.

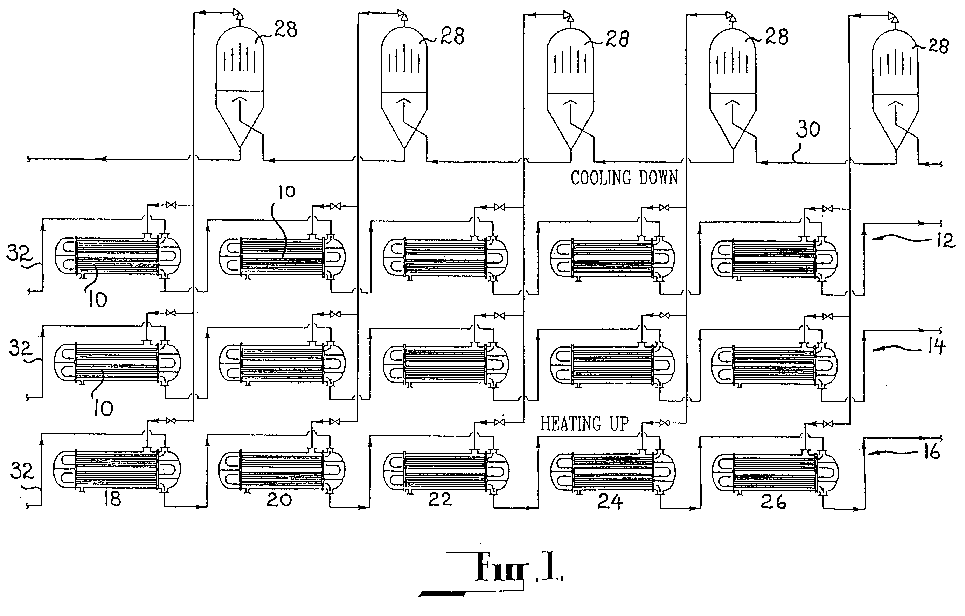

Illustrated in Figure 1 is a conventional flash vapour/heating system having a plurality of conventional tubular heat exchangers 10 arranged in three lines (12, 14 and 16) and five stages (18, 20, 22, 24 and 26). The top two lines 12 and 14 would be operating lines while the third line 16 would be a spare line.

The system illustrated is a conventional digestion system of an alumina refinery where the majority of the heat recovery takes place. The heat recovery primarily takes place by exchanging heat between the outgoing hot Bayer solution (moving through the evaporators 28 via the slurry stream 30) and the incoming cold bauxite slurry of the streams 32 to the various heater lines (12,14 and 16).

The heat recovery is accomplished in conventional tubular heat exchangers wherein the cold slurry flows through the inside of the tubes and hot flash vapour flows on the outside of the tubes. The vapour condenses on the cold(er) tubes, which causes it to release its heat of evaporation, which is then absorbed by the cold slurry stream.

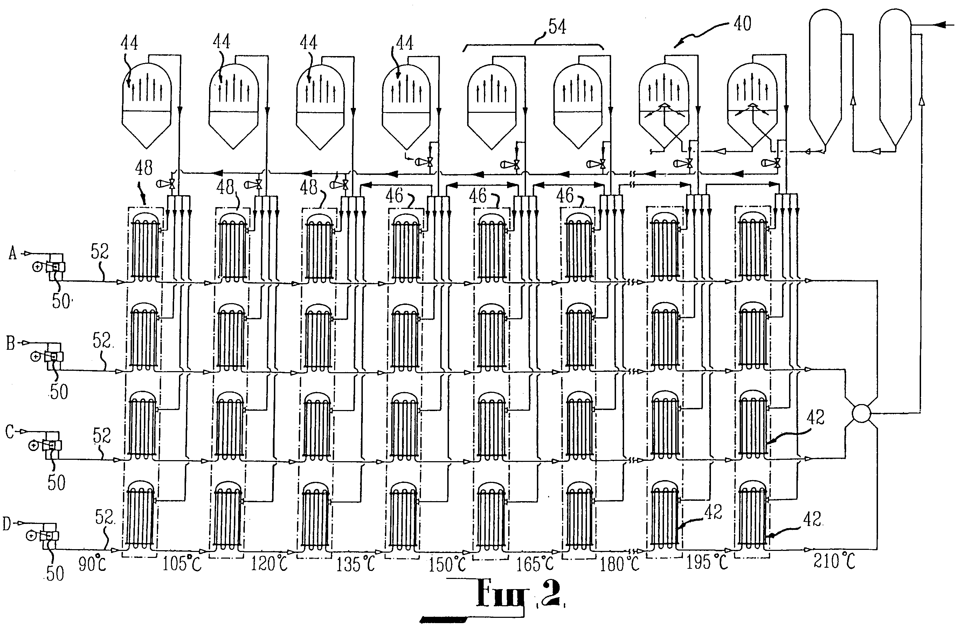

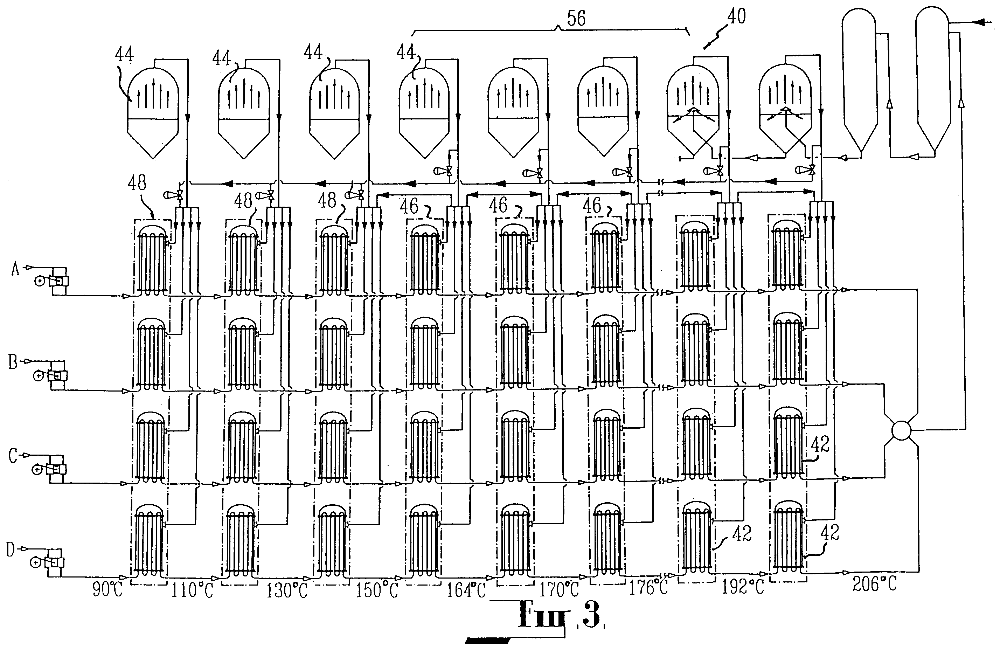

Referring to Figures 2 and 3, a first preferred embodiment of the present invention is illustrated wherein a bauxite slurry is split into four streams and is pumped into four heater cell trains (referenced as A, B, C, and D) in order to increase the temperature thereof from the inlet temperature of about 90°C to an outlet temperature of about 210°C by utilising a multi-cell heating system in accordance with the present invention.

After completion of the heating process, the heated bauxite slurry may be subjected to further heating to increase the slurry to its final operating temperature, which is followed by blending, digestion and flashing to relieve the vapour pressure and remove the heat (energy) therefrom. The normal clarification and precipitation processes may then follow to clarify and precipitate the alumina as required.

The further heating may be any type of heating as necessary, although the heating is most commonly steam heating.

In commercial operations the extraction of alumina is carried out in large volumes. The caustic liquor stream is continuously recirculated and alternately heated and cooled in accordance with the Bayer process to produce the alumina. However, because of the large size of operation, the energy content of the liquor stream is very high, especially in high temperature refineries such as that described herein, and efficient energy management is important to the economy and viability of the plant. Thus, and as indicated above, a large proportion of the equipment installed in alumina refineries is dedicated to heat recovery.

In the first preferred embodiment illustrated in Figures 2 and 3, the main heat recovery takes place in the heater cells 42 by exchanging heat between the outgoing hot Bayer solution (not shown) and the incoming cold bauxite slurry entering trains A, B, C and D. Heat is extracted from the hot stream by flash evaporation taking place in a number of stages in flash evaporators. In this respect, a flash evaporator 44 is illustrated at the top of each heater stack (46 and 48).

Heating the cold slurry stream is accomplished by condensing the flash vapour in the heater cells 42 wherein the vapour is condensed on the outside of the tube, while the bauxite slurry to be heated flows inside the tubes. The number of stages of flash evaporators depends on the type of plant, and the rise in operating temperature of the slurry, and for example in high temperature plants the number may range from 8 to about 20. In this respect, eight flash evaporators 44 have been illustrated in Figures 2 and 3 for ease of understanding. The heating stages can also be connected with one or several pressure vessels in which the slurry is retained for a certain time to allow complete dissolution. The slurry in the pressure vessel can be directly or indirectly heated to the maximum desired temperature.

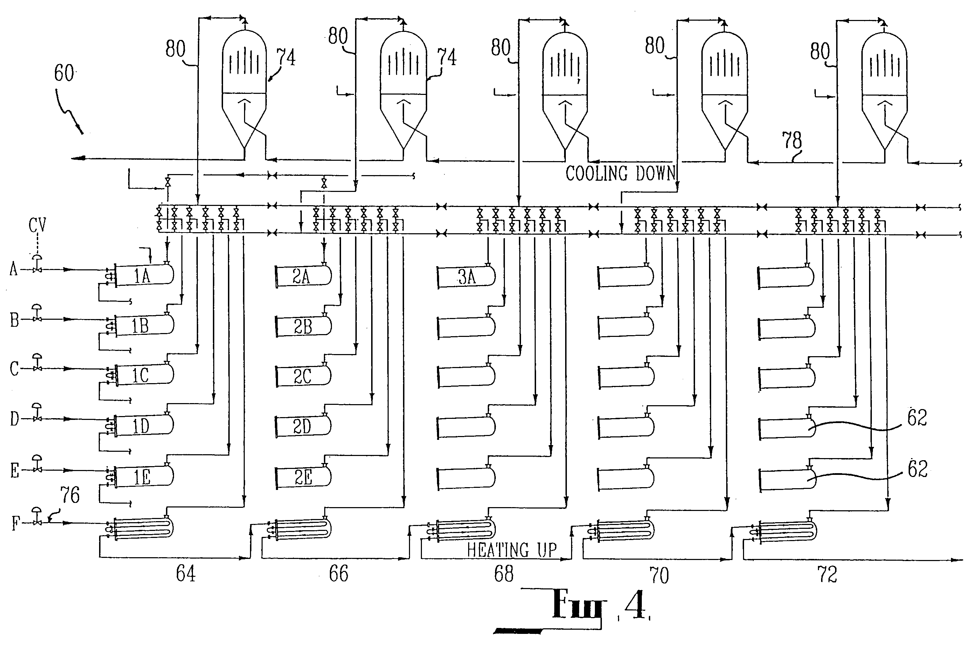

As can be seen from Figure 2, the multi-cell heating system of the first preferred embodiment of the present invention includes an array of heater cells 42, essentially arranged in Figures 2 and 3 in rows and columns. In this respect, the rows designate the four heater cell trains A, B, C, and D, whereas the columns designate the eight heater cell stacks (46 and 48). Of course, the number of heater cells in each of the trains and stacks may be altered as necessary, as will be apparent in the second preferred embodiment illustrated in Figures 4 to 7.

The system illustrated in Figures 2 and 3 includes pumps 50 which may be any type of suitable pump such as a centrifugal or positive displacement pump, and each of the streams 52 of the trains A, B, C and D may be pumped separately. Alternatively, there may be a common pump with a valve in each stream. Of course, the control for these streams may be automatic or manual.

The heater cells 42 illustrated in Figures 2 and 3 are in the form of multiple pass tube heaters as described above.

These multiple pass tube heaters are typically in the order of 20 to 30 metres long and may comprise shells having diameters of 400mm to 1000mm. A typical heater capacity is about 180 m³/h.

The interconnections between a flash evaporator 44 and the heater stack (46 or 48) above which it is aligned (and thus between adjacent heater cell stacks) is such as to allow flash vapour from the flash evaporator to be passed either directly to the heater stack aligned with the flash evaporator, or indirectly to the adjacent stacks on either side thereof or downstream of the flash control heater stacks 48. Additionally, the amount of flash vapour passed to any of the heater cells in a particular stack may also be altered.

In this way, the heating system is able to control where the heating takes place and thus where the scaling takes place. Thus, by controlling the distribution of the scale, it is possible to minimise its thickness in any one location and to minimise the pressure drop through the system and direct the heat flux to that part of the heating system most able to efficiently handle it. In particular, it can be seen that by altering the flow of flash vapour either to adjacent heater stacks or to various of the cells in a particular heater cell stack, the operator of the system is able to control the temperature profile and scaling.

In this respect, and as indicated earlier, it has been found that the rate of growth of scale increases exponentially with temperature, peaking at about 185°C and decreasing rapidly thereafter. The scaling occurs mainly between 150°C and 190°C, while above 195°C the deposition of scale has essentially ceased. Indeed, the rate of scaling at 210°C has been found to be approximately the same as that at 100°C and is about one tenth the rate of growth at the peak value of about 185°C.

Accordingly, it is evident that there is a critical temperature range that occurs between about 150 to 200°C, while the majority of scaling occurs within the range of about 175 to 190°C, peaking at about 185°C.

The region of high scale growth in a multi-cell heating system of this kind is that region where the temperature of the heater cells is within this critical temperature range. By utilising the heater system of the present invention it is possible to move the region of high scale growth about the array of heater units by adjusting the flow of flash vapour from and to various heater cell stacks and heater cells, thus changing which heater cells are effected within the critical temperature range.

To illustrate this , Figure 3 shows an altered system where the flash vapour has been redirected away from the high scale growth region 54 illustrated in Figure 2 to produce a high scale growth region 56 that covers different stacks 46. As will be seen from the approximate temperatures given at the bottom of the Figure, this causes the temperature increase across the respective heater stacks to be in accordance with the critical temperature range as described above. In this respect, it must be appreciated that temperatures included for the D train in Figures 2 and 3 are only indicative temperatures, the actual temperature range may vary depending upon the vapour distribution to individual cells.

Illustrated in Figures 4 to 7 are various aspects of a second preferred embodiment of the present invention. This embodiment better illustrates the various aspects of heater connection as will be described.

Illustrated in Figure 4 is a multi-cell heating system which comprises an array of heater cells 62 arranged so as to provide a plurality of heater cell trains (referenced as trains A, B, C, D, E and F) and a plurality of heater cell stacks (being first, second, third, fourth and fifth stages designated by reference numerals 64, 66, 68, 70 and 72.) Thus, it is evident that various of the heater cells may be referred to as 1a, 1b, 2a, 2b, 3a etc. Each stage of heater cells (being the stacks referred to above) is associated with a respective flash evaporator 74.

The hot Bayer liquor stream 78 shows passage of the hot Bayer liquor through the evaporators in order to cool that liquor. However, it will be appreciated that the streams of cold bauxite slurry being heated are not shown in their entirety, although the stream 76 for heater train F is shown in detail.

In this embodiment, the vapour piping is arranged so that vapour (in respective lines 80) from each evaporator 74 is able to be diverted to the heater cells associated with the adjacent stages, both upstream and downstream. As can be seen, this allows detailed operator control of the passage of vapour to each of the cells and thus enables the control of the temperature of each cell. While more elaborate distribution of the vapour is possible, this generally adds to the complexity of the interconnecting pipework while providing only marginal benefits.

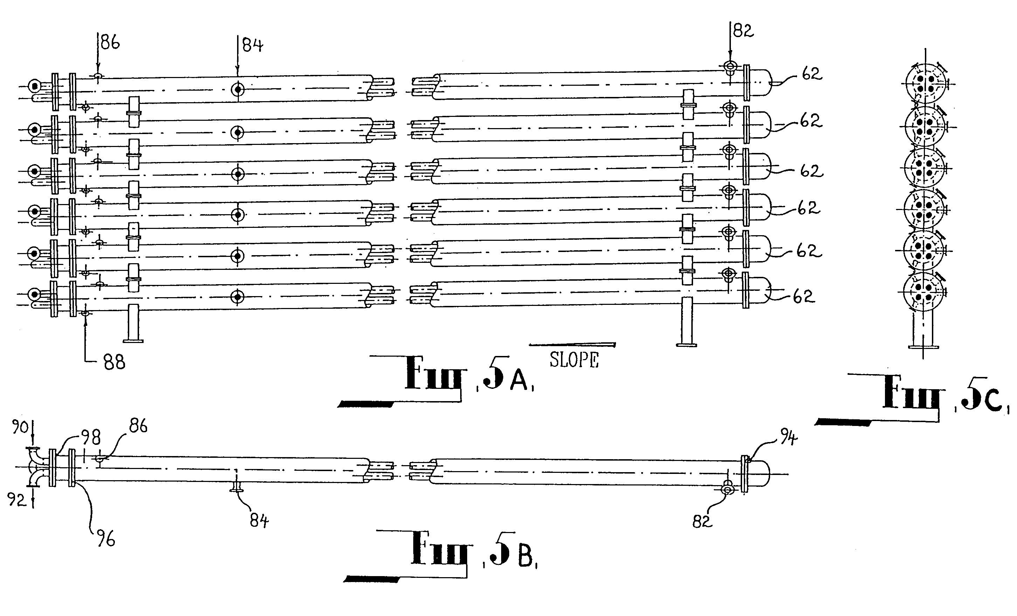

Illustrated in Figures 5a, 5b and 5c are elevation, plan and section views of one of the stages (otherwise referred to as a stack) of heater cells of Figure 4. Thus, this stage of heater cells includes six cells 62 arranged one above the other having steam inlets 82, condensate inlets 84, non-condensable outlets 86, and condensate outlets 88. The cells comprise two single pass U-tubes such that the slurry may enter the cell via inlet 90, may pass the full length of the cell, then may travel via a U-bend back to the inlet end of the cell, passing via another U-bend to the second of the single pass U-tubes, returning to the end of the cell via that second U-tube, and then back via the third U-bend to the outlet 92 of the cell. Thus, and as is evident from Figure 5c, each cell includes four tubes therewithin.

Each cell preferably includes flanges 94 which allow the removal of the end cap of the shell for inspection of the U-bends. Preferably, the depth of this cap is sufficient to allow the internal U-bends to be cut out and replaced in situ. The cells also include flanges 96 which allow access to the shell side of the cell and flanges 98 which allow access for the mechanical cleaning of the tubes if necessary.

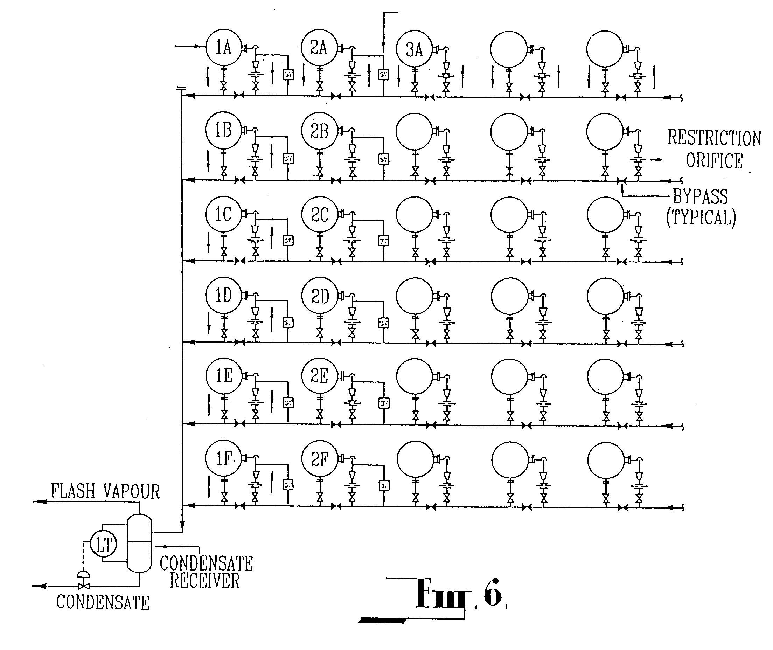

The schematic arrangement in Figure 6 illustrates for this second preferred embodiment a preferred arrangement of condensate piping. This preferred arrangement relies on orifice plates and allows steam to by-pass when the condensate flow rate declines. Such by-pass steam is not detrimental to the operation of the heating system provided it reaches an adjacent heater cell in a saturated state at the downstream pressure condition. Moreover, in the case of reduced condensate flow due to scale deposition any by-pass of steam actually enhances thermal performance. Indeed, this distributes vapour to adjoining evaporation stages without a concomitant redistribution of evaporated temperatures and pressures and thereby augments the vapour distribution pipework.

This arrangement does not require separate condensate pots except at the first stage of heaters, and reflux vapour lines, steam traps, or flow control valves may also be eliminated.

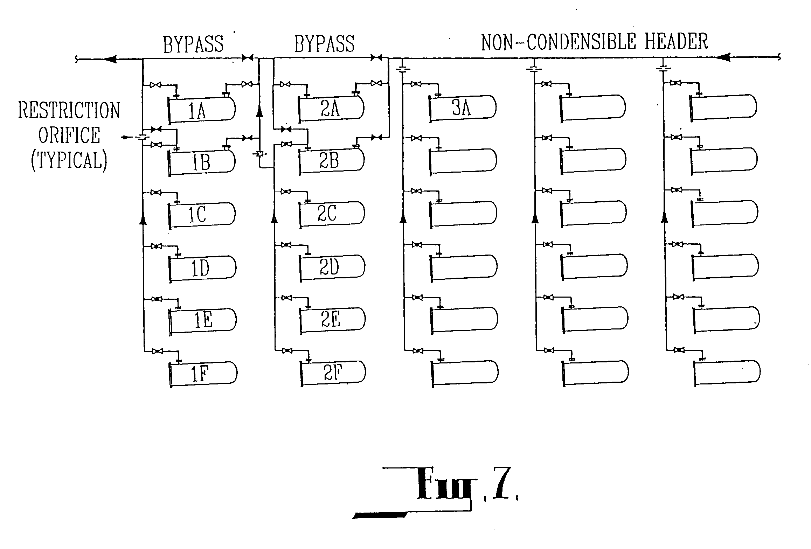

Illustrated in Figure 7 is the preferred arrangement of non condensable vent piping for the system illustrated in Figures 4 to 6. In this respect, non condensable gases entrained in the vapour system may be separated out in the condensation process and collected in the heaters. However, these gases are detrimental to the performance of the heaters and require removal. Thus, each heater cell in the system is connected to a non condensable vent system as shown in Figure 7. While these individual vent streams are small, each stream is saturated with water vapour and collectively represents a significant amount of energy, as well as condensate.

## Claims

1. A multi-cell heating system for increasing the temperature of a slurry through a critical temperature range, the heater system comprising an array of heater cells (42) the array comprising a plurality of heater cell trains (A, B, C, D) and a plurality of heater cell stacks (46, 48) each stack being associated with and being in fluid communication with a respective evaporator (44), and each train (A, B, C, D) being defined by aligned individual heater cells (42) in adjacent stacks (46, 48) such that the slurry may be split to flow through two or more of the trains (A, B, C, D) in order to be heated thereby, the array being configured such that there is an inlet temperature at one side thereof and an outlet temperature at the other side thereof, the critical temperature range corresponding to a region of high scale growth and being between the inlet and outlet temperatures, characterised in that the interconnection between each evaporator (44) and its respective heater cell stack (46, 48) is capable of allowing fluid communication between adjacent heater cell stacks (46, 48) and certain downstream heater cell stacks (46, 48) and is also capable of allowing the number of heater cell stacks (46, 48) within the region of high scale growth to be increased or decreased and is capable of allowing the substitution of heater cell stacks (46, 48) already in the region of high scale growth with heater cell stacks (46, 48) not already within the region of high scale growth, such alteration of the number of heater cell stacks within the region of high scale growth being provided by the alteration of the fluid flow from various evaporators (44) to various heater cell stacks (46, 48).

2. A multi-cell heating system according to claim 1, wherein the heater cells (42) are multiple pass heaters (62), each pass comprising only a single U-tube.

3. A multi-cell heating system according to claim 2, wherein each single pass is provided by means of U-bends to provide a single continuous tube within each cell and for each heater train.

4. A multi-cell heating system according to any one of claims 1 to 3 wherein the shell of each cell (42) has sufficient volume, clear from the heat transfer area it provides, to act as a condensate receiver.

5. A multi-cell heating system according to any one of claims 1 to 4 wherein the number of cells (42) per stack (46, 48) ranges from four to ten.

6. A multi-cell heating system according to any one of claims 1 to 5, wherein each heater cell stack (46, 48) is capable of having vapour or steam fed thereto from its associated evaporator (44), the interconnection of the adjacent evaporators and stacks allowing vapour or steam to also be fed thereto from adjacent evaporators, both upstream and downstream, and wherein each heater cell in a stack is individually valved and can have vapour or steam supply individually connected, varied or isolated as required.

7. A multi-cell heating system according to claim 6 wherein control is provided by pumping each stream individually.

8. A multi-cell heating system according to claim 6 wherein control is provided by pumping all streams from a common source, and installing a flow control valve in each train of heater cells.

9. A multi-cell heating system according to claim 7 or claim 8 wherein manual control or automatic control are utilised, being activated by the outlet temperature of the slurry heater streams.

10. A multi-cell heating system according to any one of claims 1 to 9 wherein the condensate of individual heater cells (42) or heater stacks (46, 48) is not collected in a common receiver vessel, but each train of heater cells has condensate collected and transmitted separately.

11. A multi-cell heating system according to any one of claims 1 to 10 wherein each cell (42) in a heater train (A, B, C, D) is connected to a non-condensate vent system.

12. Use of a multi-cell heating system according to any one of claims 1 to 11 as a heat recovery system in a Bayer process plant.

13. Use of a multi-cell heating system according to claim 12 wherein the critical temperature range is from 150°C to 200°C.

## Patentansprüche

1. Ein mehrzelliges Heizsystem zum Erhöhen der Temperatur eines Schlamms durch einen kritische Temperaturbereich hindurch, wobei das Heizsystem umfaßt eine Anordnung von Heizzellen (42), wobei die Anordnung eine Vielzahl von Heizzellenzügen (A, B, C, D) und eine Vielzahl von Heizzellenstapeln (46, 48) umfaßt, wobei jeder Stapel einen entsprechenden Verdampfer (44) zugeordnet und in Fluidverbindung mit diesem ist, und jeder Zug (A, B, C, D) durch ausgerichtete, einzelne Heizzellen (42) in benachbarten Stapeln (46, 48) festgelegt ist, daß der Schlamm aufgeteilt werden kann, um durch zwei oder mehrere der Züge (A, B, C, D) zu fließen, um dadurch erwärmt zu werden, wobei die Anordnung so ausgestaltet ist, daß es eine Einlaßtemperatur an einer Seite davon und eine Auslaßtemperatur an der anderen Seite davon gibt, wobei der kritische Temperaturbereich einem Bereich großen Ablagerungswachstums entspricht und zwischen der Einlaß- und Auslaßtemperatur ist, **dadurch gekennzeichnet,** daß die Verbindung zwischen jedem Verdampfer (44) und seinem entsprechenden Heizzellenstapel (46, 48) fähig ist, eine Fluidverbindung zwischen benachbarten Heizzellenstapeln (46, 48) und gewissen stromabwärtigen Heizzellenstapeln (46, 48) zuzulassen, und auch fähig ist, daß die Anzahl von Heizzellenstapeln (46, 48) innerhalb des Bereiches großen Ablagerungswachstums erhöht oder verringert wird, und fähig ist, den Ersatz von Heizzellenstapeln (46, 48), die bereits in dem Bereich großen Ablagerungswachstums sind, durch Heizzellenstapeln (46, 48), die nicht bereits innerhalb des Bereiches großen Ablagerungswachstums sind, zuzulassen, wobei eine solche Änderung der Anzahl von Heizzellenstapeln innerhalb des Bereiches großen Ablagerungswachstums durch die Änderung der Fluidströmung von verschiedenen Verdampfern (44) zu verschiedenen Heizzellenstapel (46, 48) vorgesehen wird.

2. Ein mehrzelliges Heizsystem gemäß Anspruch 1, worin die Heizzellen (42) Heizeinrichtungen (62) mit einem vielfachen Durchgang sind, wobei jeder Durchgang nur ein einziges U-Rohr umfaßt.

3. Ein mehrzelliges Heizsystem gemäß Anspruch 2, worin jeder einzelne Durchgang mittels U-Bögen vorgesehen ist, um ein einzelnes, durchgehendes Rohr innerhalb jeder Zelle und für jeden Heizzug vorzusehen.

4. Ein mehrzelliges Heizsystem gemäß irgendeinem der Ansprüche 1 bis 3, worin der Mantel jeder Zelle (42) ein ausreichendes Volumen aufweist, das von dem Wärmeübertragungsbereich beabstandet ist, den es vorsieht, um als ein Kondensatempfänger zu wirken.

5. Ein mehrzelliges Heizsystem gemäß irgendeinem der Ansprüche 1 bis 4, worin die Anzahl der Zellen (42) pro Stapel (46, 48) von vier bis zehn reicht.

6. Ein mehrzelliges Heizsystem gemäß irgendeinem der Ansprüche 1 bis 5, worin jeder Heizzellenstapel (46, 48) fähig ist, daß ihm Dampf oder Wasserdampf von seinem zugeordneten Verdampfer (44) zugeführt wird, die Verbindung der benachbarten Verdampfer und Stapel ermöglichen, daß Dampf oder Wasserdampf ebenfalls dorthin von benachbarten Verdampfern, stromaufwärts und auch stromabwärts, zugeführt wird, und worin jede Heizzelle in einem Stapel einzeln ventilgesteuert ist und eine Dampf- oder Wasserdampfzufuhr einzeln verbunden, verändert oder getrennt haben kann, wie es verlangt wird.

7. Ein mehrzelliges Heizsystem gemäß Anspruch 6, worin die Steuerung vorgesehen ist, indem jeder Strom einzeln gepumpt wird.

8. Ein mehrzelliges Heizsystem gemäß Anspruch 6, worin die Steuerung vorgesehen ist, indem alle Ströme von einer gemeinsamen Quelle gepumpt werden, und ein Mengenventil in jedem Zug von Heizzellen eingebaut ist.

9. Ein mehrzelliges Heizsystem gemäß Anspruch 7 oder Anspruch 8, worin eine Steuerung von Hand oder eine automatische Steuerung verwendet wird, die durch die Auslaßtemperatur der Schlammheizströme betätigt wird.

10. Ein mehrzelliges Heizsystem gemäß irgendeinem der Ansprüche 1 bis 9, worin das Kondensat einzelner Heizzellen (42) oder Heizstapel (46, 48) nicht in einem gemeinsamen Aufnahmebehälter gesammelt wird, sondern bei jedem Zug von Heizzellen das Kondensat getrennt gesammelt und übertragen wird.

11. Ein mehrzelliges Heizsystem gemäß irgendeinem der Ansprüche 1 bis 10, worin jede Zelle (42) in einem Heizzug (A, B, C, D) mit einem Belüftungssystem für Nichtkondensat verbunden ist.

12. Die Verwendung eines mehrzelligen Heizsystems gemäß irgendeinem der Ansprüche 1 bis 11 als ein Wärmegewinnungssystem in einer Bayer-Prozeßanlage.

13. Die Verwendung eines mehrzelligen Heizsystems gemäß Anspruch 12, worin die kritische Temperatur im Bereich von 150°C bis 200°C ist.

## Revendications

1. Système de chauffage multicellulaire destiné à augmenter la température d'une suspension épaisse sur toute une plage de températures critiques, le système de chauffage comprenant un ensemble de cellules chauffantes (42), l'ensemble comprenant plusieurs successions de cellules chauffantes (A, B, C, D) et plusieurs superpositions de cellules chauffantes (46, 48), chaque superposition étant associée à un évaporateur (44) correspondant et en communication de fluide avec celui-ci, et chaque succession (A, B, C, D) étant définie par des cellules chauffantes individuelles alignées (42) situées dans des superpositions (46, 48) adjacentes, de façon que la suspension épaisse puisse être divisée pour s'écouler à travers au moins deux des successions (A, B, C, D) pour être ainsi chauffée, l'ensemble étant conçu pour qu'il y ait une température d'entrée au niveau de l'un de ses côtés et une température de sortie au niveau de son autre côté, la plage de températures critiques correspondant à une zone de formation importante de tartre et étant comprise entre la température d'entrée et la température de sortie, caractérisé en ce que l'interconnexion entre chaque évaporateur (44) et sa superposition correspondante de cellules chauffantes (46, 48) est apte à permettre une communication de fluide entre des superpositions adjacentes de cellules chauffantes (46, 48) et certaines superpositions aval de cellules chauffantes (46, 48), et également à permettre une augmentation ou une diminution du nombre de superpositions de cellules chauffantes (46, 48) dans la zone de formation importante de tartre, ainsi qu'à permettre le remplacement des superpositions de cellules chauffantes (46, 48) déjà dans la zone de formation importante de tartre par des superpositions de cellules chauffantes (46, 48) qui ne sont pas encore dans la zone de formation importante de tartre, cette modification du nombre des superpositions de cellules chauffantes dans la zone de formation importante de tartre étant permise par la modification de l'écoulement du fluide de divers évaporateurs (44) vers diverses superpositions de cellules chauffantes (46, 48).

2. Système de chauffage multicellulaire selon la revendication 1, dans lequel les cellules chauffantes (42) sont des éléments chauffants à passages multiples (62), chaque passage ne comprenant qu'un seul tube en U.

3. Système de chauffage multicellulaire selon la revendication 2, dans lequel chaque passage individuel est réalisé au moyen de coudes en U pour former un seul tube continu à l'intérieur de chaque cellule et pour chaque succession d'éléments chauffants.

4. Système de chauffage multicellulaire selon l'une quelconque des revendications 1 à 3, dans lequel l'enveloppe de chaque cellule (42) a un volume suffisant, à distance de la surface de transfert de chaleur qu'elle définie, pour servir de récepteur de condensats.

5. Système de chauffage multicellulaire selon l'une quelconque des revendications 1 à 4, dans lequel le nombre de cellules (42) par superposition (46, 48) est dans la plage de quatre à dix.

6. Système de chauffage multicellulaire selon l'une quelconque des revendications 1 à 5, dans lequel chaque superposition de cellules chauffantes (46, 48) est apte à recevoir de la vapeur ou de la vapeur d'eau en provenance de son évaporateur (44) associé, l'interconnexion des évaporateurs et des superpositions adjacents permettant également la fourniture de vapeur ou de vapeur d'eau à ces dernières à partir d'évaporateurs adjacents, à la fois en amont et en aval, et dans lequel chaque cellule chauffante d'une superposition est individuellement munie d'une soupape et peut être individuellement reliée pour être alimentée en vapeur ou en vapeur d'eau, réglée ou isolée en fonction des besoins.

7. Système de chauffage multicellulaire selon la revendication 6, dans lequel une commande est assurée par pompage de chaque écoulement individuellement.

8. Système de chauffage multicellulaire selon la revendication 6, dans lequel la commande est assurée par pompage de tous les écoulements à partir d'une source commune, et installation d'une vanne de réglage de débit dans chaque succession de cellules chauffantes.

9. Système de chauffage multicellulaire selon la revendication 7 ou la revendication 8, dans lequel est utilisée une commande manuelle ou automatique activée par la température de sortie des écoulements de suspension épaisse.

10. Système de chauffage multicellulaire selon l'une quelconque des revendications 1 à 9, dans lequel le condensat de cellules chauffantes (42) individuelles ou de superpositions d'éléments chauffants (46, 48) n'est pas collecté dans un récipient collecteur commun, mais dans lequel le condensat de chaque succession de cellules chauffantes est collecté et transmis séparément.

11. Système de chauffage multicellulaire selon l'une quelconque des revendications 1 à 10, dans lequel chaque cellule (42) d'une succession d'éléments chauffants (A, B, C, D) est reliée à un système d'évacuation de substances autres que des condensats.

12. Utilisation d'un système de chauffage multicellulaire selon l'une quelconque des revendications 1 à 11, comme système de récupération de chaleur dans une installation de traitement Bayer.

13. Utilisation d'un système de chauffage multicellulaire selon la revendication 12, dans laquelle la plage de températures critiques s'étend de 150 °C à 200 °C.
